# EUROPEAN PATENT APPLICATION

(11) **EP 1 586 407 A1**
(43) Date of publication of application: **19.10.2005**
(21) Application number: 03701137.6
(22) Date of filing: 21.01.2003
(51) Int. Cl.: B23K 26/38

(54) **LASER CUTTING DEVICE, LASER CUTTING METHOD, AND LASER CUTTING SYSTEM**

(71) Applicant: Toyota Steel Center Co., Ltd., Tokai-shi, Aichi 476-8533 (JP)
(72) Inventor: AOKI, Tatsuhiko c/o Toyota Steel Center Co., Ltd., Tokai-shi, Aichi 476-8533 (JP); HAMAJI, Masanori c/o Toyota Steel Center Co., Ltd., Tokai-shi, Aichi 476-8533 (JP); HIROSE, Yasuhiro c/o Toyota Steel Center Co., Ltd., Tokai-shi, Aichi 476-8533 (JP)
(74) Representative: Copsey, Timothy Graham
(86) International application number: PCT/JP2003/000469
(87) International publication number: WO 2004/065055

(57) **Abstract**

It is an object of the present invention to provide a laser cutting device, a method for laser cutting and a laser cutting system with which it is possible to perform laser cutting of parts of various shapes through easy control, to prevent adhesion of dust or similar and scratches being formed in cut parts, and to send out such parts while reliably supporting the same. The present laser cutting device 5 is comprised with a material transferring means A that transfers a sheet-like material 11 in a feeding direction, a processing head B that is capable of irradiating laser light towards the material, a head moving means C that makes the processing head move in the feeding direction X and a width direction Y of the material, an upstream-sided supporting means (belt conveyer mechanism F) that supports the material on an upstream side of a downward portion of the processing head and that expands and contracts a supporting region R2 for the material accompanying movements of the processing head in the feeding direction, and a downstream-sided supporting means (belt conveyer mechanism E) that supports cut parts on a downstream side of a downward portion of the processing head and that expands and contracts a supporting region R1 for the cut parts accompanying movements of the processing head in the feeding direction.

## Description

### Background of the Invention

### 1. Field of the Invention

The present invention relates to a laser cutting device, a method for laser cutting and a laser cutting system. More particularly, the present invention relates to a laser cutting device and a method for laser cutting with which it is possible to perform laser cutting of parts of various shapes through easy control, to prevent adhesion of dust or similar and scratches being formed in cut parts, and to send out such parts while reliably supporting the same. The present invention further relates to an extremely compact laser cutting system, which does not require exclusive molds or a variety of coil strips of different sheet width such that it is possible to reduce, to the utmost, the number of stocks, spaces for storing the same and also the number of rewinding the coil strips, and is thus favorable for use in high-mix low-volume production.

The present invention is widely used in the field of, for instance, laser cutting of blank materials used as material parts of press parts of vehicles or the like and related fields thereof.

### 2. Description of the Prior Art

Model changes of vehicles are being frequently performed in these days, and with each model change, the number of pressed parts is being on the trend of increasing. The demand for supplying blank materials in small lots to coil centers for supplying such press materials will accordingly increase. Blanking lines of such coil centers employ a method, in the aspect of improving yields, in which sheet-like materials, which are wound out from coils, are cut by using a blanking press to obtain blank materials.

However, such blanking lines required exclusive molds for each of the parts so that a large space for storage and maintenance of such exclusive molds and personnel are accordingly required. For processing a large variety of blank materials, it will be required to keep a large number of coil strips of different sheet width. Therefore, the required number of stock and space thereof will increase, the number of rewinding exclusive coil strips increase, the productivity decrease, and the number of stocks and space for storing the same will accordingly increase. While overseas production is increasingly being performed, introduction of blanking lines was difficult owing to the small amount of production thereof.

It is thus being considered to utilize processing different shapes through laser cutting in blanking lines. More particularly, a conventional laser cutting system is known to comprise, for instance, a coil strip supporting device for supporting a coil strip such that a sheet-like material may be wound out therefrom, a leveler device that is disposed on a downstream side of the coil strip supporting device for flatly extending the material, a laser cutting device that is disposed on a downstream side of the leveler device for performing laser cutting of the material, and a collection device that is disposed on a downstream side of the laser cutting device for collecting cut parts (product parts, scrap parts etc.) {see Japanese Patent Unexamined Publication No. 2002-59288 (hereinafter referred to as Patent Reference 1)}.

The above laser cutting device is arranged in that it comprises a material transferring means (roll feeder 31) that transfers a sheet-like material that is wound out from a coil strip, a processing head (processing head 54) that is movable in a feeding direction (direction of axis X) and a width direction (direction of axis Y) of the material and that is capable of irradiating laser light towards the material, and a material supporting means (pin holder conveyer 51) that supports the material and cut parts at a downward portion of the processing head.

The material wound out from the coil strip is sent out by the material transferring means in the feeding direction, undergoes laser cutting by the processing head that moves within a horizontal plane, and cut parts are sent out by the material supporting means thereafter.

However, since such a conventional laser cutting device employs a pin holder conveyer as the material supporting means that is provided at a downward portion of the processing head so as to move in an orbiting manner, it is actually impossible to provide a dust-collecting means that collects spatter or dust (spatter after cooling) that is generated when performing laser cutting. Consequently, dust or similar may adhere to rear surfaces of cut parts wherein scratches may be formed in press-molded articles in following processes due to influences of such adhering dust. It was accordingly necessary to cleanly wipe each of the rear surface of the cut parts off which resulted in poor production efficiency and higher manufacturing costs.

It is further the case with pin holder conveyers that laser light, which has been irradiated from the processing head and that has passed the material, directly hits the plurality of supporting members that constitute the pin holder conveyer to cause degradations thereof. Accordingly, when laser light is repeatedly irradiated onto the same spot, it might happen that degradations in strength of the supporting members resulted in cutting, and thus necessitated periodical exchanges.

In view of this fact, a conventional laser cutting device capable of solving the above problems is known to comprise, for instance, a material transferring means (moving station 4) that transfers a sheet-like material (strip material 2) that is wound out from a coil strip, a processing head (focusing head 6) that is movable only in a width direction (direction of axis y) of the material and that is capable of irradiating laser light towards the material, a material supporting means (feed table 51) that supports the material and cut parts at a downward portion of the processing head, and a dust-collecting means (accumulating chamber 7) that is disposed immediately below the processing head. {see Japanese Patent Unexamined Publication No. 2001-300754 (hereinafter referred to as Patent Reference 2)}.

According to this publication, the material wound out from the coil strip is sent out by the material transferring means in the feeding direction, undergoes laser cutting by the processing head that only moves in the material width direction and cut parts are sent out by the material supporting means thereafter. Then, at the time of performing laser cutting, spatter or dust is sucked and collected by the dust-collecting means so that adhesion of dust or similar to rear surfaces of cut parts may be restricted.

No laser light from the processing head will directly hit and degrade the plurality of supporting members comprising the material supporting means (feed table 51), and it will not be necessary to exchange these supporting members.

However, in the laser cutting device according to the Patent Reference 2, the processing head is arranged in that it is immovable in the feeding direction and only movable in the width direction of the material for the purpose of disposing the dust-collecting means at a downward portion of the processing region. Accordingly, laser cutting is performed while synchronizing movements of the material in the feeding direction by the material transferring means and movements of the processing head in the material width direction of the material. Accordingly, control thereof was extremely troublesome since it was necessary to frequently increase or decrease the amount of movement of the material in the feeding direction by the material transferring means or to frequently perform inversion between forward and reverse. Particularly in case shapes of products included portions of acute angles, it would happen that movements of the material transferring means could not follow movements of the processing head.

Further, since a pin holder conveyer or a pin holder table comprised of a plurality of supporting members was used in the laser cutting devices of the above Patent Reference 1 and Patent Reference 2, drawbacks were presented, depending on pitch clearances of the pin holders, that cut parts (particularly small-sized parts etc.) could not be sent out upon reliably supporting the same. Moreover, when absorbing and holding cut parts supported by the pin holder conveyer or the pin holder table through a transportation robot or similar, cut parts would be pressed against the pin holder conveyer or the pin holder table so that it would happen that scratches were formed on rear surfaces of the cut parts.

Accordingly, the laser cutting systems employing the laser cutting devices of Patent Reference 1 and Patent Reference 2 were not established as effective systems, and in practice, blank materials were cut by using conventional blanking presses.

### Summary of the Invention

The present invention has been made in view of the above facts, and it is an object thereof to provide a laser cutting device and a method for laser cutting with which it is possible to perform laser cutting of parts of various shapes through easy control, to prevent adhesion of dust or similar and scratches being formed in cut parts, and to send out such parts while reliably supporting the same.

It is another object of the present invention to provide an extremely compact laser cutting system, which does not require exclusive molds or a variety of coil strips of different sheet width such that it is possible to reduce, to the utmost, the number of stocks, spaces for storing the same and also the number of rewinding the coil strips, and is thus favorable for use in high-mix low-volume production.

The present invention is represented as follows.
1. A laser cutting device, comprising
   a material transferring means that transfers a sheet-like material in a feeding direction,
   a processing head that is capable of irradiating laser light towards said material,
   a head moving means that makes said processing head move in the feeding direction and a width direction of said material,
   an upstream-sided supporting means that supports said material that is transferred by said material transferring means and that expands and contracts a supporting region for said material accompanying movements of said processing head in the feeding direction, and
   a downstream-sided supporting means that supports cut parts, which are obtained by performing laser cutting of said material by means of said processing head, and that expands and contracts a supporting region for said cut parts accompanying movements of said processing head in the feeding direction.
2. The laser cutting device as mentioned in above 1., further comprising a dust-collecting means that collects dust at a downward portion of said processing head.
3. The laser cutting device as mentioned in above 1., further comprising a material cutting means that cuts said material through shearing.
4. The laser cutting device as mentioned in above 1., wherein said downstream-sided supporting means is comprised of a belt conveyer mechanism or a roller conveyer mechanism.
5. The laser cutting device as mentioned in above 1., wherein said upstream-sided supporting means is comprised of a belt conveyer mechanism or a roller conveyer mechanism.
6. The laser cutting device as mentioned in above 4. or 5., wherein said belt conveyer mechanism includes a displacement roller that is displaceable along the feeding direction, a reference roller that opposes the displacement roller remote therefrom by a specified distance in the feeding direction and that is not displaceable, an endless belt that is would around between said displacement roller and said reference roller, and a tension adjusting means that adjusts tension of the endless belt.
7. The laser cutting device as mentioned in above 6., wherein said tension adjusting means includes a tension adjusting roller that is displaceable within a plane including the feeding direction and by which said endless belt is wound around.
8. The laser cutting device as mentioned in above 6., wherein said displacement roller is supported to be freely rotating by a sliding member that comprises said head moving means and that is movable along the feeding direction.
9. The laser cutting device as mentioned in above 1., wherein said material transferring means includes a pair of transfer rollers capable of pinching said material from front and rear directions, and a driving source that rotates at least either one of said transfer rollers.
10. The laser cutting device as mentioned in above 2., wherein said dust-collecting means includes a dust-collecting box that is movable in the feeding direction and that is provided with an upper end aperture facing along the width direction of said material.
11. The laser cutting device as mentioned in above 10., wherein said dust-collecting box is fixed at a sliding member that comprises said head moving means and that is movable along the feeding direction.
12. The laser cutting device as mentioned in above 3., wherein said material cutting means includes a pair of upper and lower cutting blades that relatively approach and estrange with respect to each other.
13. The laser cutting device as mentioned in above 1., wherein said processing head is capable of irradiating laser light that is transmitted through optical fibers.
14. A method for laser cutting employing the laser cutting device as mentioned in above 1., wherein the method comprises the steps of expanding and contracting said supporting region for said material of said upstream-sided supporting means in the feeding direction as well as of expanding and contracting said supporting region for said cut parts of said downstream-sided supporting means in the feeding direction accompanying movements of said processing head in the feeding direction.
15. The method for laser cutting as mentioned in above 14., wherein dust is collected by a dust-collecting means at a downward portion of said processing head when performing laser cutting of said material.
16. The method for laser cutting as mentioned in above 14., wherein said material is cut upon combining cutting through laser cutting and shearing.
17. A laser cutting system, comprising a coil strip supporting device for supporting the coil strip such that a sheet-like material may be wound out from the coil strip, a leveler device that is disposed on a downstream side of the coil strip supporting device for flatly expanding said material wound out from said coil strip, and said laser cutting device as mentioned in above 1. that is disposed on a downstream side of the leveler device for cutting said material that has been flatly expanded by the leveler device.
18. The laser cutting system as mentioned in above 17., further comprising a loop forming device that is disposed between said leveler device and said laser cutting device for forming a loop portion on said material that has been flatly expanded by said leveler device.
19. The laser cutting system as mentioned in above 17., further comprising a separating and collecting device that is disposed on a downstream side of said laser cutting device for separating and collecting product parts, which are the cut parts, and scrap parts.

According to the laser cutting device of the present invention, materials undergo laser cutting by the processing head that moves in the feeding direction and the width direction of the materials. Accordingly, it is possible to perform laser cutting with minimum requirements for the control of the material transferring means also when parts are of complicated shapes.

Further, when performing laser cutting, the supporting region of the upstream-sided supporting means for the material is expanded and contracted in the feeding direction while the supporting region of the downstream-sided supporting means for the cut parts is expanded and contracted in the feeding direction accompanying movements of the processing head in the feeding direction. Accordingly, a space is continuously formed between the upstream-sided supporting means and the downstream-sided supporting means and a portion immediately below the processing head so that laser light that passes through the material will not directly hit against the upstream-sided and downstream-sided supporting means so that it will not be necessary to exchange these supporting means periodically. When a dust-collecting means is provided in the above space, it is possible to prevent adhesion of dust or similar to cut parts.

Since laser light that is irradiated from the processing head will not directly hit the upstream-sided supporting means and the downstream-sided supporting means, the upstream-sided supporting means and the downstream-sided supporting means may be arranged as to be capable of reliably supporting and sending out cut parts regardless of the size or shape thereof.

When providing a dust-collecting means for collecting dust at a downward portion of said processing head, it is possible to reliably collect dust that is generated when performing laser cutting.

When providing a material cutting means for cutting said material through shearing, it is possible to selectively combine laser cutting and shearing, and thus to extremely improve production efficiency depending on shapes of parts.

When comprising said downstream-sided supporting means of a belt conveyer mechanism or a roller conveyer mechanism, it is possible to reliably support and send the materials or cut parts by the downstream-sided supporting means without damaging the same.

When comprising said upstream-sided supporting means of a belt conveyer mechanism or a roller conveyer mechanism, it is possible to reliably support and send out the materials by the upstream-sided supporting means without damaging the same.

When said belt conveyer mechanism includes a displacement roller, a reference roller, an endless belt and a tension adjusting means, the supporting region of the endless belt is expanded and contracted by the displacement of the displacement roller in the feeding direction wherein tension of the end less belt is maintained at a suitable value by the tension adjusting means. It is accordingly possible to more reliably support and send out materials and cut parts that are mounted on the upper surface of the endless belt without damaging the same.

When said tension adjusting means is provided with a tension adjusting roller that is displaceable within a plane including the feeding direction and that is wound around said end less belt, the tension of the endless belt may be maintained at a suitable value in an even more reliably manner,

When said displacement roller is supported to be freely rotating by a sliding member that comprises said head moving means and that is movable along the feeding direction, the processing head with the displacement roller may be integrally moved in the feeding direction to more accurately synchronize movements of the processing head with expanding and contracting actions of the supporting region of the belt conveyer mechanism. Further, there is no need for an exclusive driving source for displacing the displacement roller so that the belt conveyer mechanism may be of even simpler and cheaper arrangement.

When said material transferring means includes a pair of transfer rollers capable of pinching the material from front and rear directions, and a driving source that rotates at least either one of said transfer rollers, it is possible to more reliably send out said material in the feeding direction and to make the transferring means be of simple and cheap arrangement.

When said dust-collecting means includes a dust-collecting box that is movable in the feeding direction and that is provided with an upper end aperture facing along the width direction of said material, dust and others may be collected in a more reliable manner, and the dust-collecting means may be of simple and cheap structure.

When said dust-collecting box is supported by a sliding member that comprises said head moving means and that is movable along the feeding direction, the processing head and the dust-collecting box may be accurately synchronized for moving into the feeding direction. No exclusive driving source is required for moving the dust-collecting box, and the dust-collecting means may be of simpler and cheaper structure.

When said material cutting means includes a pair of upper and lower cutting blades that relatively approach and estrange with respect to each other, the materials may be even faster cut, and the material cutting means may be of simple and cheap structure.

When said processing head is capable of irradiating laser light that is transmitted through optical fibers, it is possible to achieve a light-weighted structure for the head moving means so as to realize rapid laser cutting.

According to the method for laser cutting of the present invention, materials undergo laser cutting by the processing head that moves in the feeding direction and the width direction of the materials. Accordingly, it is possible to perform laser cutting with minimum requirements for the control of the material transferring means also when parts are of complicated shapes.

Further, when performing laser cutting, the supporting region of the upstream-sided supporting means for the material is expanded and contracted in the feeding direction while the supporting region of the downstream-sided supporting means for the cut parts is expanded and contracted in the feeding direction accompanying movements of the processing head in the feeding direction. Accordingly, a space is continuously formed between the upstream-sided supporting means and the downstream-sided supporting means and in a portion immediately below the processing head so that laser light that passes through the material will not directly hit against the upstream-sided and downstream-sided supporting means so that it will not be necessary to exchange these supporting means periodically. When a dust-collecting means is provided in the above space, it is possible to prevent adhesion of dust or similar to cut parts.

Since laser light that is irradiated from the processing head will not directly hit the upstream-sided supporting means and the downstream-sided supporting means, the upstream-sided supporting means and the downstream-sided supporting means may be arranged as to be capable of reliably supporting and sending out cut parts regardless of the size or shape thereof.

When performing laser cutting of said material, by the provision of a dust-collecting means for collecting dust at a downward portion of said processing head, it is possible to more reliably prevent adhesion of dust and others to cut parts.

When cutting said material through shearing upon selectively combining laser cutting and shearing, it is possible to cut the material at favorable production efficiency, depending on shapes of parts.

According to the laser cutting system of the present invention, it is possible to perform successive laser cutting of sheet-like materials that are wound out from the coil strip at rapid speed and high accuracy. Accordingly, there is no need for large space for storage and maintenance for exclusive molds or personnel as it is the case with conventional material cutting employing a blanking press. A large variety of blank materials may be processed out of a material of single sheet width. There is accordingly no need to hold a large number of coil strips of different sheet widths so that it is possible to reduce the number of stock, spaces for storing the same, and the number of rewinding to the utmost, and it is furthermore enabled to process blank materials while largely improving the production efficiency and yields. Since laser cutting is performed, there will be no limits for sheet thickness of materials to be cut, and the facility is allowed to be extremely compact with a minimum required rigidity. It is possible to process and deliver blank materials of high-mix low volume production in an intensified manner. Further, blank materials for overseas production parts may be processed, packaged and exported in an intensified manner so that blank materials may be utilized in overseas plants. With the above arrangement, it is possible to largely contribute to demanding sides mainly comprised of press-manufacturers, and it is possible to provide new fields in processing coil materials.

When a loop forming device that is disposed between said leveler device and said laser cutting device for forming a loop portion on the material that has been flatly expanded by said leveler device is further provided, differences in amounts of feeding materials between the leveler device and the laser cutting device may be cancelled.

When a separating and collecting device that is disposed on the downstream side of said laser cutting device for separating and collecting product parts, which are the cut parts, and scrap parts is further provided, it is possible to easily separate and collect production parts and the scrap parts.

### Brief Explanation of the Drawings

Fig. 1 is a side view illustrating the overall structure of a laser cutting system according to the present embodiment.
Fig. 2 is a plan view in which a part of Fig. 1 has been omitted.
Fig. 3 is a side view of the laser cutting system according to the present embodiment.
Fig. 4 is a view seen from arrow IV in Fig. 3.
Fig. 5 is an explanatory view for explaining expanding and contracting actions of the respective supporting regions of each belt conveyer mechanism.
Fig. 6 is an explanatory view for explaining a separating and collecting device, wherein (a) illustrates an embodiment in which a vacuum member and a pressurizing member are provided, and (b) an embodiment in which only the vacuum member is provided.
Fig. 7 is an explanatory view for explaining a separating and collecting device according to another embodiment.
Fig. 8 is a side view illustrating a laser cutting system according to another embodiment.
Fig. 9 is a side view illustrating a laser cutting system according to still another embodiment.
Fig. 10 is a plan view illustrating embodiments for cutting other materials, wherein (a) illustrates an embodiment in which a plurality of parts are cut in a feeding direction and a width direction of the sheet material, and (b) an embodiment in which a plurality of parts are cut in the feeding direction.
Fig. 11 is a side view illustrating a laser cutting device according to another embodiment.
Fig. 12 is a side view illustrating a laser cutting system according to still another embodiment.
Fig. 13 is a side view illustrating a laser cutting system according to still another embodiment.
Fig. 14 is a side view illustrating a laser cutting system according to still another embodiment.
Fig. 15 is a side view illustrating a laser cutting system according to still another embodiment.

### Detailed Descriptions

The present invention will now be explained below in details.

### (Laser Cutting System)

The laser cutting system according to the present embodiment is comprised to include a coil strip supporting device, a leveler device and a laser cutting device as will be explained hereinafter.

The laser cutting system may include any one of a loop forming device, a separating and collecting device and a laser welding device as will be explained hereinafter.

Structures or sizes of the above "coil strip supporting device" are not particularly limited as long as it can support a coil strip such that sheet-like materials can be wound out from the coil strip.

Structures or sizes of the above "leveler device" are not particularly limited as long as it is provided on a downstream side of the above coil strip supporting device and as long as it is capable of flatly expanding the materials would out from the coil strip.

Structures or sizes of the above "loop forming device" are not particularly limited as long as it is disposed between the above leveler device and a laser cutting device (to be described later) and as long as it is capable of forming a loop portion on a material that has been flatly expanded by the leveler device.

It should be noted that, for instance, the loop forming device might be omitted from the above laser cutting system. More particularly, materials that have been flatly expanded by the above leveler device may be sent to the laser cutting device (to be described later) without forming loop portions. With this arrangement, the laser cutting system may be of extremely compact size.

Structures or sizes of the above "separating and collecting device" are not particularly limited as long as it is disposed on a downstream side of the laser cutting device (to be described later) and as long as it is possible to separate and collect product parts, which are the cut parts, and scrap parts.

The separating and collecting device may be embodied as to be one or a combination of more than two of embodiment (1), embodiment (2) and embodiment (3) that are to be illustrated below.

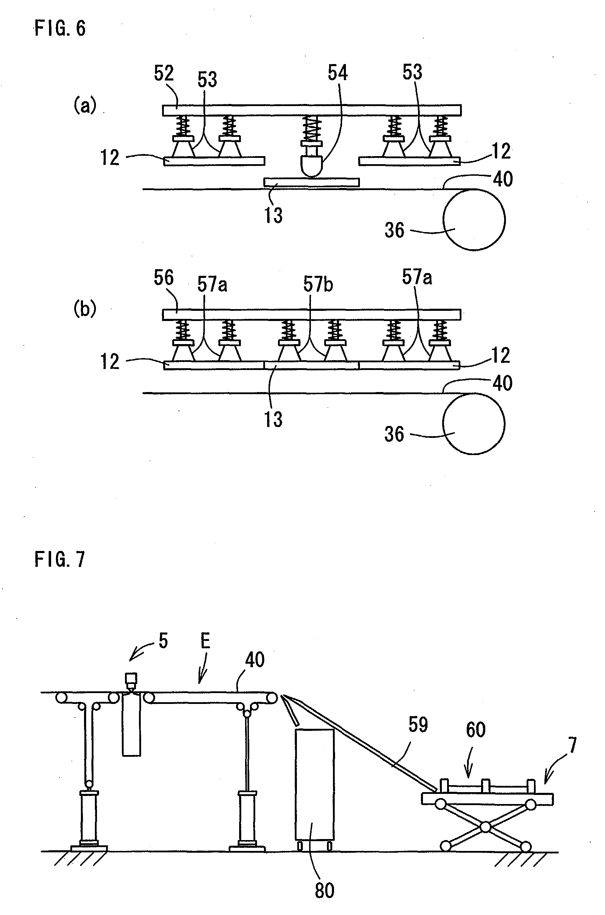

(1) An embodiment in which it comprises a guiding means that guides product parts that are sent out from a downstream-sided supporting means (to be described later), an integrating and collecting means that integrates and collects product parts that are guided by the guiding means, and a collecting means that collects scrap parts that are sent out from the downstream-sided supporting means (to be described later)(see Fig. 7). (2) An embodiment in which it comprises a transporting means (for instance, a transportation robot), a moving and loading member that is transported by the transporting means, an absorbing means that is provided at the moving and loading member so as to absorb the product parts, a pressurizing means that is provided at the moving and loading member so as to pressurize the scrap parts downward, and a control means that controls absorption and release of the above absorbing means (See Fig. 6(a)). (3) An embodiment in which it comprises a transporting means (for instance, a transportation robot), a moving and loading member that is transported by the transporting means, a first absorbing means that is provided at the moving and loading member so as to absorb the product parts, a second absorbing means that is provided at the moving and loading member so as to absorb the scrap parts, and a control means that controls absorption and release of the first and second absorbing means (See Fig. 6(b)).

It should be noted that the above moving and loading member is usually attached at a tip end portion of a movable arm of the transportation robot. The embodiment (1) is usually employed when shapes and directions of cut parts are identical. Embodiments (2) and (3) are usually employed when shapes and directions of cut parts are different.

The above laser welding device may be disposed, for instance, on a downstream side of the laser cutting device to be described later. With this arrangement, problems related to storage and maintenance of molds can be eliminated when compared to conventional systems employing blanking presses, and to obtain tailored blank materials while remarkably improving yields and production efficiencies.

### (Laser Cutting Device)

The laser cutting device according to the present embodiment is comprised with a material transferring means, a processing head, a head moving means, an upstream-sided supporting means and a downstream-sided supporting means as will be explained hereinafter.

The laser cutting device may include at least either one of a dust-collecting means and a material cutting means that are to be described hereinafter.

Forms of transfer, structures or sizes of the above "material transferring means" are not particularly limited as long as it is capable of transferring sheet-like materials in the feeding direction. Examples of forms of transfer of the material transferring means are, (1) an embodiment in which no materials are transferred when performing laser cutting, (2) an embodiment in which materials are transferred at constant speed when performing laser cutting, and (3) an embodiment in which materials are transferred at differing speed when performing laser cutting. Particularly in embodiment (1), it is preferable that the material transferring means is capable of performing intermittent transfer of materials and capable of positioning and fixing materials. With this arrangement, laser cutting may be performed in which the materials are in conditions in which they have been positioned and fixed by the material transferring means, and there is no need to perform any control of material transfer by the material transferring means when performing laser cutting.

The material transferring means may comprise a grip mechanism that is capable of pinching, for instance, end edge portions of materials and that is movable along the feeding direction. In the aspect of achieving a simple and cheap structure, it is preferable that the material transferring means includes a pair of transfer rollers capable of pinching the material from front and rear directions, and a driving source that rotates at least either one of the transfer rollers. The material transferring means may be comprised of the above leveler device. With this arrangement, it is possible to perform laser cutting of materials that are transferred by the leveler device in the feeding direction, and the overall system may be of simpler and cheaper structure.

Types of laser, structures and sizes of the above "processing head" are not particularly limited as long as it is possible to irradiate laser light towards the materials. Types of such laser light may, for instance, be YAG (yttrium-aluminum-garnet) laser light, ruby laser light, CO₂ laser light or Ar light. The processing head may, for instance, include a nozzle member for irradiating laser light. An outer diameter of a nozzle of the nozzle member is usually approximately 2 to 10 mm. The processing head may further include a detecting means that detects, for instance, an opposing distance with respect to the material (for instance a proximity switch or a capacitive sensor). With this arrangement, the clearance between the tip end side of the processing head and the material can be maintained constant and collision between both members may be prevented.

Since the dimensional accuracy of the above coil strip is generally allowed in the positive direction, it is preferable that an original position for the above processing head is defined to be the center in the width direction of the materials.

When employing YAG laser light, it is possible to perform laser cutting by using a plurality of processing heads by performing, for instance, output divergence or time share. With this arrangement, it is possible to simultaneously perform slit processing of end portions in width directions of materials and processing of irregular shapes so that the productivity may be largely improved.

Forms for moving, structures or sizes of the above "head moving means" are not particularly limited as long as the processing head may be moved at least in the feeding direction and the width direction of the materials. The head moving means may comprise, for instance, a sliding member that is supported to be freely movable in the feeding direction along a guide portion (for instance, a guide rail) that is provided at a supporting frame on the fixing side, a telescopic arm tool that is supported by the sliding member for supporting the above processing head in a fixed condition, and a driving source for moving the sliding member. The head moving means may further comprise a first sliding member that is supported to be freely movable along the feeding direction at a guide portion (for instance, a guide rail) that is provided at a supporting frame on the fixing side, a second sliding member that is supported to be freely movable along the width direction of the material at a guide portion that is provided at the first sliding member (for instance, a guide rail), a third sliding member that is supported to be freely movable in vertical directions along a guide portion that is provided at the second sliding member (for instance, a guide rail) for supporting the above processing head in a fixed condition, and respective driving sources (for instance, respective driving motors) for moving the first, second and third sliding members. Suitable power transmission mechanisms (for instance, ball screw mechanisms) are usually interposed between the above respective sliding members and the respective driving sources.

The above head moving means may be controlled on the basis of, for instance, NC data. Such NC data are data that have been converted from CAD data. Accordingly, it is possible to easily correspond to these upon performing data conversion when performing changeovers or others, and no large space for storage and maintenance of molds will be required when compared to conventional arrangements employing blanking presses.

Amounts of expansion and contraction, structures and sizes of the above "upstream-sided supporting means" are not particularly limited as long as it is possible to support materials that are transferred by the above material transferring means and as long as the supporting region for the material may be expanded and contracted in the feeding direction in synchronization with movements of the above processing head in the feeding direction. The upstream-sided supporting means may be a telescopic conveyer mechanism, a telescopic table mechanism, or a telescopic shutter mechanism. The telescopic conveyer mechanism may be a belt conveyer mechanism, a roller conveyer mechanism, a caterpillar conveyer mechanism or a pin holder conveyer mechanism. It is preferable that the upstream-sided supporting means is a belt conveyer mechanism or a roller conveyer mechanism in view of reliably supporting materials and of providing an easy and cheap structure. The upstream-sided supporting usually supports materials on the upstream side of a downside portion of the processing head. Further, the upstream-sided supporting means usually expands and contracts the supporting region for the material in the feeding direction by an amount of expansion and contraction that is identical to the amount of movement of the processing head in the feeding direction.

Amounts of expansion and contraction, structures and sizes of the above "downstream-sided supporting means" are not particularly limited as long as it is possible to support cut parts (product parts, scrap parts etc.) that are obtained by performing laser cutting of materials through the above processing head and as long as the supporting region for the cut parts may be expanded and contracted in the feeding direction in synchronization with movements of the above processing head in the feeding direction. The downstream-sided supporting means may be a telescopic conveyer mechanism, a telescopic table mechanism, or a telescopic shutter mechanism. The telescopic conveyer mechanism may be a belt conveyer mechanism, a roller conveyer mechanism, a caterpillar conveyer mechanism or a pin holder conveyer mechanism. It is preferable that the downstream-sided supporting means is a belt conveyer mechanism in view of reliably supporting cut parts and of providing an easy and cheap structure. The above downstream-sided supporting means usually supports mainly cut parts on the downstream side of a downside portion of the processing head. Further, the downstream-sided supporting means usually expands and contracts the supporting region for the cut parts in the feeding direction by an amount of expansion and contraction that is identical to the amount of movement of the processing head in the feeding direction.

It should be noted that not only the cut parts but also the tip end portion in the feeding direction of materials prior to cutting is supported by the above downstream-sided supporting means.

Accompanying movements of the above processing head in the feeding direction, the above upstream-sided supporting means will usually make the supporting region for the materials expand (or contract) in the feeding direction while the above downstream-sided supporting means will make the supporting region for the cut parts contract (or expand) in the feeding direction. More particularly, regardless of expansion and contraction of the supporting region for the materials and the supporting region for the cut parts in the feeding direction, the sum of the supporting region for the materials and the supporting region for the cut parts will be a specified value. With this arrangement, the respective supporting regions for the upstream-sided supporting means and the downstream-sided supporting means are restricted to minimum required values for improving the space efficiency.

The above upstream-sided supporting means and the downstream-sided supporting means may be arranged in that their respective supporting regions are expanded and contracted in the feeding direction upon being connected to a sliding member that comprises the above head moving means and that is movable in the feeding direction and upon moving the sliding member in the feeding direction. More particularly, the respective supporting regions for the above upstream-sided supporting means and the downstream-sided supporting means may be expanded and contracted in the feeding direction by means of a driving source that comprises the above head moving means. With this arrangement, moving actions of the processing head in the feeding direction and expanding and contracting actions of the upstream-sided supporting means and the downstream-sided supporting means may be reliably synchronized. Moreover, it is possible to obtain a simple and cheap structure of the device as a whole without requiring any exclusive driving sources for the upstream-sided supporting means and the downstream-sided supporting means.

The above "belt conveyer mechanism" may, for instance, include a displacement roller and a reference roller that are disposed to oppose each other along the feeding direction, an endless belt that is wound around between the displacement roller and the reference roller, and a tension adjusting means that adjusts the tension of the endless belt.

The displacement roller and/or the reference roller may be driven to rotate by means of a driving source (for instance, a driving motor) or similar. The displacement roller may also be displaceable by means of an exclusive driving source (for instance, a fluid cylinder). In view of achieving an even simpler and cheaper structure, it is preferable that the displacement roller is supported to be freely rotating by the sliding member that comprises the above head moving means. The endless belt may be formed of, for instance, rubber material (preferable urethane rubber). The endless belt may further be provided, for instance, with a silicone layer on a surface side thereof.

The above tension adjusting means may include a pressurizing member that is freely displaceable within a plane including the feeding direction and that pressurizes the above endless belt. In view of adjusting tension in an even simpler manner, it is preferable that the tension adjusting means includes a tension adjusting roller that is displaceable within a plane including the feeding direction and that is wound around by the endless belt. The tension adjusting roller may be displaceable by means of an exclusive driving source (for instance, a fluid cylinder). Moreover, in view of improving space efficiency in vertical directions, it is preferable that the tension adjusting roller is displaceable in the feeding direction.

The above belt conveyer mechanism may include a cleaning means (for instance, a brush member) that contacts, for instance, a surface of the above endless belt. With this arrangement, it is possible to clean the surface of the endless belt and to remove dust or refuses that have scattered and adhered to the belt surface so as to prevent adhesion thereof to product parts.

The above belt conveyer mechanism may include, for instance, a supporting member (for instance, a supporting sheet material) that supports a rear surface of an upper circulating portion of the above endless belt. With this arrangement, it is possible to prevent slacks in the upper circulating portion of the endless belt. The supporting member may be provided, for instance, along the width direction of the materials. The supporting member may be provided, for instance, at the sliding member that comprises the above-described head moving means.

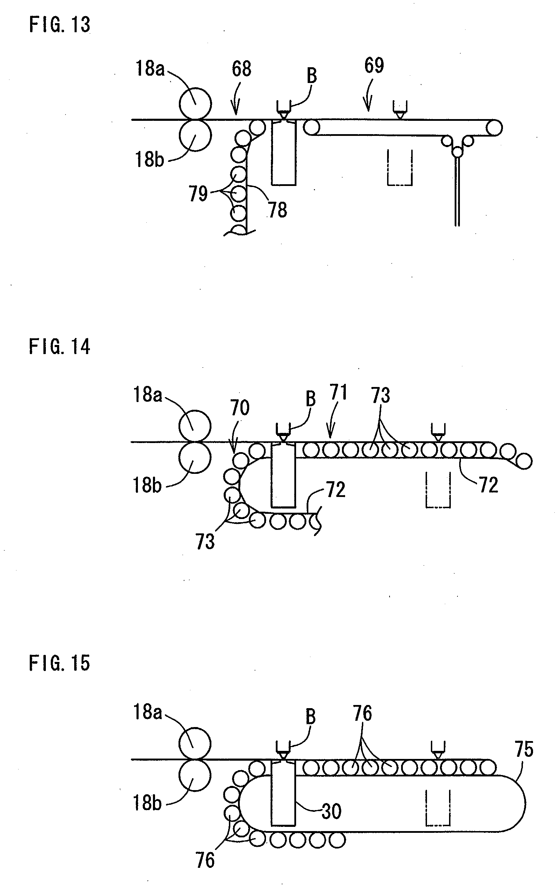

The above "roller conveyer mechanism" may include, as will be explained in the embodiments that will follow hereinafter, a shutter member that is freely movable along the feeding direction and that may be accumulated at an accumulating position and a plurality of supporting rollers that are supported by the shutter member in a freely rotating manner (see Figs. 13 and 14). The roller conveyer mechanism may further include, for instance, an endless belt that may perform orbiting movements and a plurality of supporting rollers that are supported by the endless belt in a freely rotating manner (see Fig. 15).

The above roller conveyer mechanism may further include, for instance, an expanding and contracting tool that may expand and contract along the feeding direction, a plurality of supporting portions that are provided at the expanding and contracting tool along the feeding direction, a plurality of supporting rollers that are supported at the plurality of supporting portions in a freely rotating manner.

Forms of dust-collection, structures and sizes of the above "dust-collecting means" are not particularly limited as long as it is possible to collect dust or similar at a downward portion of the above processing head. The dust-collecting means may include, for instance, a dust-collecting box that is freely movable along the feeding direction and that is formed with an upper end aperture that faces along the width direction of the material. The dust-collecting means may include, for instance, an air sucking means (for instance, a suction blower) that is in airtight connection with the dust-collecting box. The above dust-collecting box may be movable by means of an exclusive driving source (for instance, a fluid cylinder). In view of obtaining a simpler and cheaper structure, it is preferable that the dust-collecting box is fixed at the above sliding member that comprises the above-described head moving means. The dust-collecting box may include, for instance, an inclined bottom surface portion. With this arrangement, it is possible to restrict blowing up of dust that has been collected within the dust-collecting box.

Forms of cutting, structures and sizes of the above "material cutting means" are not particularly limited as long as it is possible to cut the materials through shearing. The material cutting means may be disposed, for instance, between the above material transferring means and the above upstream-sided supporting means. The material cutting means may include, for instance, a pair of upper and lower cutting blades that relatively approach and estrange with respect to each other.

It should be noted that the above "sheet-like materials" may be successive sheet materials wound out from a coil strip or sheet materials of specified size that have been wound out from a coil strip and preliminarily cut.

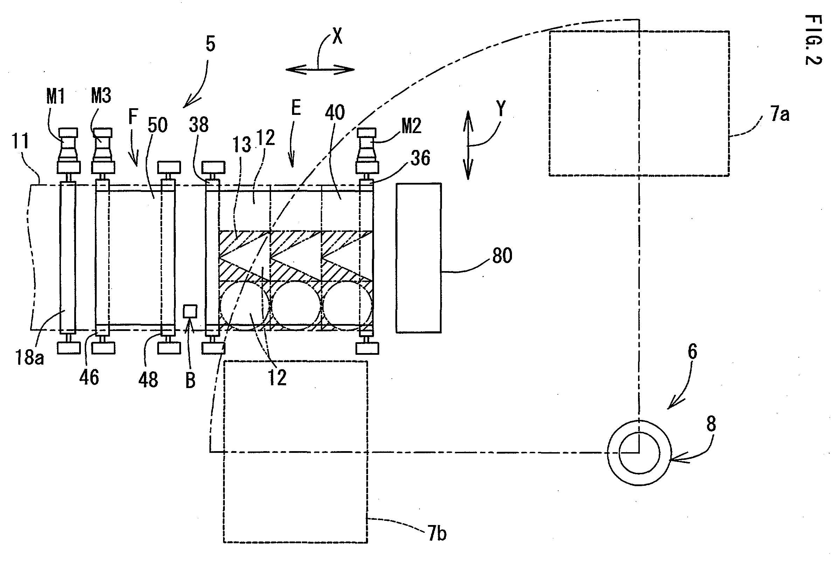

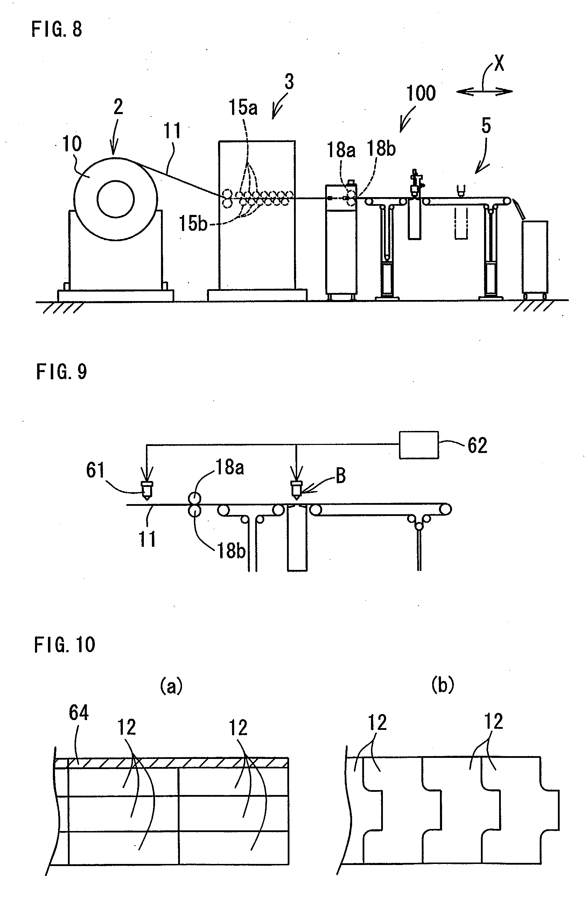

Examples of forms for processing by using the above laser cutting system are such, for instance, in which product parts are successively processed as the cut parts (see, for instance, Fig. 10(b)), or in which product parts and scrap parts are successively processed as cut parts (see, for instance, Figs. 2 and 10(a)). The above term "product parts" usually indicates materials for parts to be pressed. The above term "scrap parts" usually indicates residue materials that are either reused or wasted.

### (Laser Cutting Method)

The laser cutting method according to the present embodiment is arranged in that the supporting region for the materials of the above upstream-sided supporting means is expanded (or contracted) in the feeding direction while the supporting region for the cut parts of the above downstream-sided supporting means is contracted (or expanded) in the feeding direction accompanying movements of the above processing head in the feeding direction when performing laser cutting of materials. Here, regardless of expansion and contraction of the supporting region for the materials and the supporting region for the cut parts in the feeding direction, the sum of the supporting region for the materials and the supporting region for the cut parts will be a specified value.

According to this laser cutting method, it is possible to perform laser cutting of materials that are in positioned and fixed conditions. According to this laser cutting method, it is possible to perform laser cutting while collecting dust, for instance, at a downward portion of the processing head. Moreover, according to this laser cutting method, it is possible to cut materials while selectively combining laser cutting and shearing for performing cutting.

For reference purposes, the processing head of the present embodiment that is capable of irradiating laser light may be replaced by a processing head that is capable of irradiating plasma so as to comprise a plasma cutting device.

### Description of the Preferred Embodiments

The present invention will now be explained in details on the basis of embodiments while referring to the drawings.

It should be noted that in the following embodiments, "right" and "left" indicate a width direction Y of a sheet-like material (herein after simply referred to as "sheet material" 11 while "front" and "rear" indicate a feeding direction X of the sheet material.

### 1. Structure of the Laser Cutting System

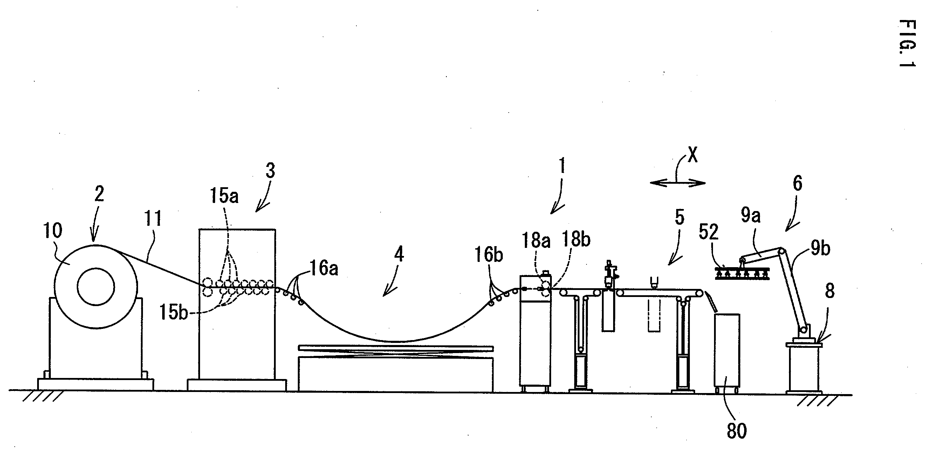

As illustrated in Fig. 1, the laser cutting system 1 according to the present embodiment is basically comprised with a coil strip supporting device 2 that is disposed on an uppermost-stream side, a leveler device 3 that is disposed on a downstream side of the coil strip supporting device 2, a loop forming portion 4 that is formed on a downstream side of the leveler device 3, a laser cutting device 5 that is disposed on a downstream side of the loop forming portion 4, and a separating and collecting device 6 that is disposed on a downstream side of the laser cutting device 5.

It should be noted that two integrating and collecting portions 7a, 7b for integrating and collecting product parts are set within a range of transportation of a transportation robot 8 that comprises the separating and collecting device 6 as illustrated in Fig. 2.

The above coil strip supporting device 2 includes a suitable inserting tool (not shown) that may be inserted into a hollow portion of the coil strip 10. The coil strip 10 is supported by this inserting tool such that sheet materials 11 may be successively wound out therefrom. The above leveler device 3 includes upper and lower rollers 15a, 15b disposed in a staggered arrangement. The sheet materials 11 that are wound out from the coil strip 10 are flatly expanded and uncurled by these upper and lower rollers 15a, 15b. The above loop forming portion 4 includes a plurality of upstream-sided and downstream-sided supporting rollers 16a, 16b for forming a loop portion on the sheet material 11 which has been uncurled in the leveler device 3.

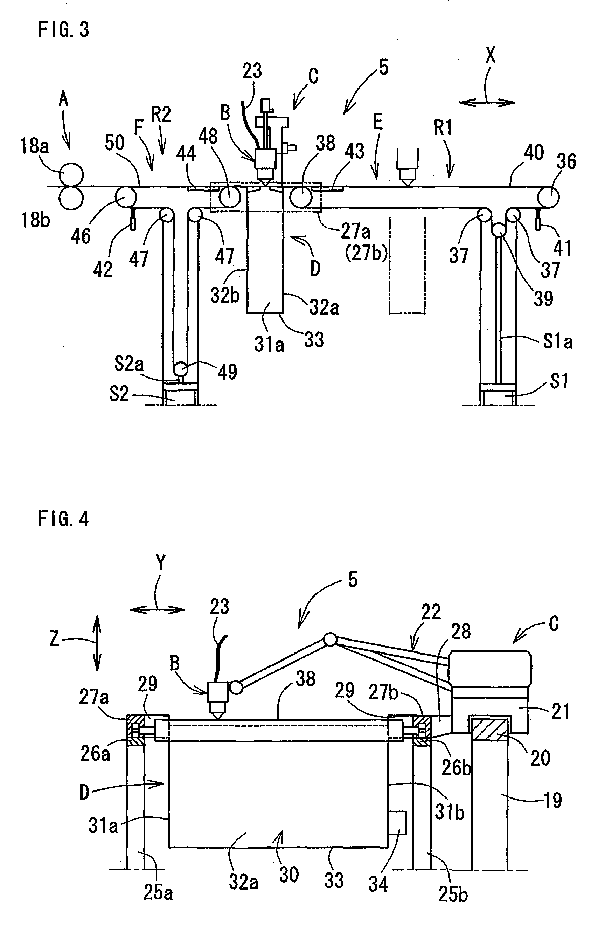

The above laser cutting device 5 will now be explained. As illustrated in Figs. 3 and 4, the laser cutting device 5 is basically comprised with a material transferring means A, a processing head B, a head moving device C, a dust-collecting means D, a belt conveyer mechanism E (illustrated as a downstream-sided supporting means) and a belt conveyer mechanism F (illustrated as an upstream-sided supporting means).

The material transferring means A will first be explained. The supporting frame 17 is provided with a pair of upper and lower transfer rollers 18a, 18b. The pair of transfer rollers 18a, 18b is intermittently driven to rotate by a driving motor M1 (see Fig. 2) so that the sheet material 11 that is pinched between the transfer rollers 18a, 18b may be intermittently transferred along the feeding direction X. The transfer rollers 18a, 18b are arranged to approach to and estrange from each other through a driving cylinder (not shown) for enabling changeover or similar of the sheet materials 11. There are further provided, on the upstream side of the pair of transfer rollers 18a, 18b, a vertical guiding roller (not shown) for guiding and supporting a lower surface side of the sheet material 11 and a lateral guiding roller (not shown) for guiding and supporting a lateral side of the sheet material 11.

The above head moving means C will now be explained. A guide rail 20 extending along the feeding direction X is provided at one side portion of a supporting frame 19. A sliding member 21 is supported at the guide rail 20 to be freely movable. The sliding member 21 is arranged to slide in the feeding direction by means of a ball screw mechanism (not shown) that is connected to a suitable driving motor (not shown).

A base end side of a movable arm tool 22 is supported at the above sliding member 21. The above processing head B that is capable of irradiating YAG laser light on to the sheet material 11 is fixed at a tip end side of the movable arm tool 22. The processing head B is accordingly arranged to perform three-dimensional movements in the feeding direction X, the material width direction Y and the vertical directions Z. It should be noted that optical fibers 23 are used for propagation of YAG laser light from a laser oscillator (not shown) with respect to the above processing head B.

The above dust-collecting means D will now be explained. As illustrated in Fig. 4, right and left guide rails 26a, 26b extending in the feeding direction X are disposed at the right and left supporting frames 25a, 25b. Right and left sliding blocks 27a, 27b are supported by the right and left guide rails 26a, 26b in a freely movable manner. The above-described sliding member 21 is connected to one sliding block 27b via a connecting portion 28. Both side portions of the dust-collecting box 30 are connected to the sliding blocks 27a, 27b via connecting portions 29. The respective sliding blocks 27a, 27b are thus enabled to slide in the feeding direction X accompanying movements of the sliding member 21 and the processing head B in the feeding direction X.

The above dust-collecting box 30 is comprised of right and left side walls 31a, 31b in the sheet material width direction Y, front and rear side walls 32a, 32b in the feeding direction X, and a bottom wall 33. A suitable suction source (for instance, a suction blower) is connected to a connecting pipe portion 34 formed at one side wall 31b for generating suitable suction air flow within the dust-collecting box 30 such that spatter or dust generated at the time of performing laser cutting is sucked and collected.

It should be noted that the original position of the above processing head B is set to be at an uppermost-stream side in the feeding direction X, central of the sheet material width direction Y and at an uppermost side in the vertical directions Z.

The above belt conveyer mechanism E will now be explained. A reference roller 36 and a plurality (two in the drawings) of guide rollers 37 are supported at a supporting frame (not shown) in a freely rotating manner as illustrated in Figs. 3 and 4. A driving shaft of a driving motor M2 (see Fig. 2) is connected to a rotating shaft of the reference roller 36. A displacement roller 38 is supported between the above-described right and left sliding blocks 27a, 27b in a freely rotating manner. A tension adjusting roller 39 is supported at a tip end side of a piston rod S1a of a driving cylinder S1 that is disposed along a vertical direction in a freely rotating manner. An endless belt 40 made of urethane rubber is wound around the reference roller 36, the guide rollers 37, the displacement roller 38 and the tension adjusting roller 39. The endless belt 40 is accordingly made to perform orbiting movements in a specified direction upon driving the driving motor M2.

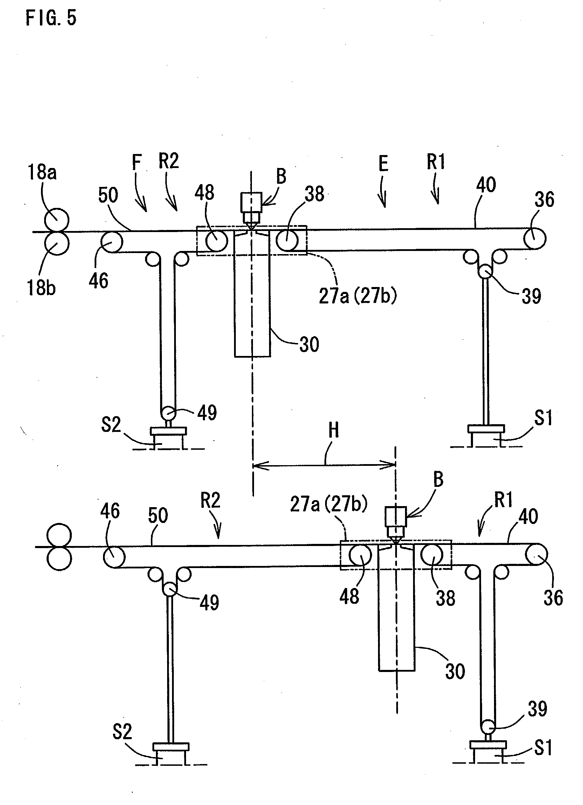

Further, as illustrated in Fig. 5, the displacement roller 38 moves along the feeding direction X accompanying movements of the sliding member 21 in the feeding direction X and the tension adjusting roller 39 moves in vertical directions through the action of the driving cylinder S1. Consequently, accompanying movements of the processing head B in the feeding direction X within a specified processing area H (for instance, 1,000 mm), the supporting region R1 for the cut parts is expanded and contracted via the belt conveyer mechanism E.

The above belt conveyer mechanism F will now be explained. A reference roller 46 and a plurality (two in the drawings) of guide rollers 47 are supported at a supporting frame (not shown) in a freely rotating manner as illustrated in Figs. 3 and 4. A driving shaft of a driving motor M3 (see Fig. 2) is connected to a rotating shaft of the reference roller 46. A displacement roller 48 is supported between the right and left sliding blocks 27a, 27b in a freely rotating manner. A tension adjusting roller 49 is supported at a tip end side of a piston rod S2a of a driving cylinder S2 that is disposed along a vertical direction in a freely rotating manner. An endless belt 50 made of urethane rubber is wound around the reference roller 46, the guide rollers 47, the displacement roller 48 and the tension adjusting roller 49. The endless belt 50 is accordingly made to perform orbiting movements in a specified direction upon driving the driving motor M3.

Further, as illustrated in Fig. 5, the displacement roller 48 moves along the feeding direction X accompanying movements of the sliding member 21 in the feeding direction X and the tension adjusting roller 49 moves in vertical directions through the action of the driving cylinder S2. Consequently, accompanying movements of the processing head B in the feeding direction X within a specified processing area H (for instance, 1,000 mm), the supporting region R2 for the cut parts is expanded and contracted via the belt conveyer mechanism F.

It should be noted that brush members 41, 42 that contact surfaces of the respective belts are disposed at downside orbiting movement portions of the respective endless belts 40, 50. Slack preventing plates 43, 44 extending along the sheet material width direction Y are provided on a rear surface of an upside orbiting movement portion of the respective endless belts 50. These slack preventing plates 43, 44 are fixedly attached to the above-described right and left sliding blocks 27a, 27b. Accordingly, accompanying movements of the sliding member 21 and the processing head B in the feeding direction X, the slack preventing plates 43, 44 move in the feeding direction X.

The above separating and collecting device 6 will now be explained. The separating and collecting device 6 comprises a transportation robot 8 with a plurality of movable arms 9a, 9b (see Fig. 1). A moving and loading member 52 is supported on a tip end side of the movable arm 9a of the transportation robot 8. As illustrated in Fig. 6(a), a vacuum member 53 is supported on a lower surface side of the moving and loading member 52 to be freely movable in vertical directions via a spring at a position opposing product parts 12 from among cut parts. A pressurizing member 54 is supported on a lower surface side of the moving and loading member 52 to be freely movable in vertical directions via a spring at a position opposing the scrap parts 13 from among cut parts. A stroke length of the pressurizing member 54 is set to be a value that is larger than that of a stroke length of the above vacuum member 53.

Accordingly, when the moving and loading member 52 is descended in a condition in which it opposes a downstream side of the endless belt 40 through the action of the transportation robot 8, the scrap parts 13 are pressed on to the surface of the endless belt 40 by the pressurizing member 54 while the product parts 12 are sucked by the vacuum member 53. Thereafter, when the moving and loading member 52 is ascended, the products parts 12 sucked by the vacuum member 53 will also be ascended, and by transporting this moving and loading member 52, the product parts 12 are integrated by the integrating and collecting portion 7a (7b). On the other hand, through the orbiting movements of the endless belt 40, scrap parts 13 remaining on the surface of the belt 40 are transported and collected by a collecting box 80 (see Fig. 1).

It should be noted that while the present embodiment is arranged in that the moving and loading member 52 is provided with the vacuum member 53 and the pressurizing member 54, the present invention is not limited to this, and it is alternatively possible to provide, for instance, vacuum members 57a, 57b at a moving and loading member 56 as illustrated in Fig. 6(b). In this case, product parts 12 on the surface of the endless belt 40 are sucked by the vacuum member 57a while the scrap parts 13 are sucked by the vacuum member 57b, and transportation of the moving and loading member 56 and suction and release of the respective vacuum member 57a, 57b are controlled by a suitable control means for making the product parts 12 be integrated by the integrating and collecting portion 7a (7b) and for making the scrap parts 13 be collected by the collecting box 80.

Further, as illustrated in Fig. 7, it is alternatively possible to arrange a separating and collecting device 60 in which a guiding member 59 for guiding and making product parts 12 flow into the integrating and collecting portion 7 on a discharge side of the endless belt 40 for the product parts 12. With this arrangement, product parts 12 of identical shapes and identical directions (see Fig. 10(b)) may be effectively collected. In addition to such a separating and collecting device 60 comprised of the guiding member 59 and the integrating and collecting portion 7, it is possible to provide the above-described separating and collecting device 6 comprised of the above-described moving and loading member 52 (56) and the transportation robot 8 such that the separating and collecting devices 60, 6 are selectively used depending on the shapes and directions of the product parts 12.

### 2. Actions of the Laser Cutting System

Actions of the laser cutting system 1 arranged in the above-described manner will now be explained. First, as illustrated in Fig. 1, sheet materials 11 are successively wound out from the coil strip 10 that is supported by the coil strip supporting device 2. The sheet material 11 that has been wound out from the coil strip 10 is uncurled by the leveler device 3, formed with a loop portion by the loop forming portion 4 and is sent between a pair of transfer rollers 18a, 18b. Here, as illustrated in Fig. 3, the above processing head B is positioned at the original position. Accordingly, the supporting region R2 for the sheet materials of the belt conveyer mechanism F is in a most contracted condition while the supporting region R1 for the cut parts of the belt conveyer mechanism E is in a most expanded condition. From these conditions, when the sheet material 11 is intermittently sent out in the feeding direction X by the pair of transfer rollers 18a, 18b, the sheet material 11 is supported by the upper surface of the endless belt 50 of the belt conveyer mechanism F. The tip end edge portion of the sheet material 11 is supported by the upper surface of the endless belt 40 of the belt conveyer mechanism E. The sheet material 11 is then positioned and fixed by the pair of transfer rollers 18a, 18b.

Thereafter, the sliding member 21 is slid while also actuating the movable arm tool 22 for three-dimensionally moving the processing head B in the feeding direction X, the sheet material width direction Y and vertical directions Z. The sheet material 11 then undergoes laser cutting through YAG laser light that is irradiated from the processing head B so as to obtain product parts 12 and scrap parts 13 (see Fig. 2). When performing laser cutting, the supporting region R2 for the sheet material 11 of the belt conveyer mechanism F is expanded (or contracted) while the supporting region R1 for the cut parts of the belt conveyer mechanism E is contracted (or expanded) accompanying movements of the processing head B in the feeding direction X as illustrated in Fig. 5. Moreover, spatter or dust generated at the time of performing laser cutting is sucked and collected by the dust-collecting box 30 that is moved with the processing head B in the feeding direction X.

Thereafter, upon completion of the series of laser cutting actions, transportation actions of the cut parts 12, 13 and sending-out actions of the sheet materials will be performed with the processing head B being in a condition in which it has been returned to the original position. More particularly, cut parts 12, 13 are sent out by a specified amount in the feeding direction X through orbiting movements of the endless belt 40 while the endless belt 50 is also made to perform orbiting movements in synchronization with the driving of the endless belt 40 in an orbiting manner and the sheet material 11 is intermittently sent out by a specified amount in the feeding direction X through the pair of transfer rollers 18a, 18b in the above-described manner.

Then, the moving and loading member 52 (see Fig. 6(a)) is made to oppose the cut parts 12, 13, which are supported on a lowermost-stream sided surface of the endless belt 40, by the action of the transportation robot 8 and is descended from this opposing condition. Then, while the product parts 12 are sucked and held by the vacuum member 53, the scrap parts 13 are pressed onto the surface of the endless belt 40 through the pressurizing member 54. Thereafter, transportation of the moving and loading member 52 as well as suction and release of the vacuum member 53 is suitably controlled to make the product parts 12 be integrated and collected in the integrating and collecting portion 7a (7b). On the other hand, scrap parts 12 left on the surface of the endless belt 40 are discharged by the transportation actions of the following sheet material 11 to be collected by the collecting box 80.

### 3. Effects of the Embodiment

As explained so far, according to this embodiment, the laser cutting system 1 is arranged to comprise a laser cutting device 5 including belt conveyer mechanisms E and F so that it is possible to perform successive laser cutting of sheet materials 11 that have been wound out from the coil strip 10 at high speed and high accuracy. Accordingly, there is no need for large spaces for storage and maintenance of exclusive molds and personnel as it is the case with conventional material cutting methods employing a blanking press. A large variety of blank materials may be processed out of materials of a single sheet width. There is accordingly no need to hold a large number of coil strips of different sheet widths so that it is possible to reduce the number of stock of coil strips, spaces for storing the same, and the number of rewinding to the utmost, and it is furthermore enabled to process blank materials while largely improving the production efficiency and yields. By performing laser cutting, there will be no limits for the sheet thickness of materials to be cut and the facility is allowed to be extremely compact with a minimum required rigidity. It is possible to process and deliver blank materials for high-mix low-volume production in an intensified manner. It is further possible to process blank materials in an intensified manner for overseas production parts, wherein these blank materials are mounted onto palettes that have been modularized on the basis of planar shapes of containers (see Japanese Patent No. 2732216), and wherein the palettes mounted with the blank materials are mounted into containers through a suitable transportation means (forklift or similar) without the necessity of performing any lashing operations within the containers such that the containers may be exported to overseas through suitable shipping means (ships etc.) to utilize these blank materials in overseas plants. On the basis of the above, it is possible to largely contribute to demanding sides mainly comprised of press-manufacturers, and it is possible to provide new fields in processing coil materials.

According to the laser cutting device 5 of the present embodiment, laser cutting of the sheet material 11 is performed while moving the processing head B in the feeding direction X and the sheet material width direction Y so that it is not necessary to send the sheet material 11 out while controlling driving of the transfer rollers 18a, 18b when performing laser cutting. It is accordingly possible to perform laser cutting through easy control even if the parts are of complicated shape.

Since the supporting region R1 for the cut parts of the belt conveyer mechanism E and the supporting region R2 for the sheet material of the belt conveyer mechanism F are expanded and contracted in the feeding direction X accompanying movements of the processing head B in the feeding direction X when performing laser cutting, it is possible to continuously form a space (cavity) immediately below the processing head B and between the respective belt conveyer mechanisms E and F. Consequently, laser light that has been irradiated from the processing head B and that has passed the sheet material will not directly hit the respective belt conveyer mechanisms E and F so that it will not be necessary to periodically exchange the respective belt conveyer mechanisms E and F to thus reduce the running cost to a minimum required level.

Since the dust-collecting box 30 is provided by utilizing the above space, spatter or dust generated when performing laser cutting may be forcibly sucked and collected so that no dust or similar will adhere to rear surfaces of the cut parts 12, 13. Accordingly, there is no necessity to wipe the rear surfaces of the product parts 12 off each by each as in the prior art, and it is possible to perform production in an effective manner at low costs.

Since the sheet materials 11 are supported by the belt conveyer mechanism F while the product parts 12 are supported by the belt conveyer mechanism E, it is possible to reliably support and send the sheet materials 11 and product parts 12 out without forming any scratches thereon. Regardless of the shapes and sizes of the cut parts 12, 13, and particularly, no matter how small the cut parts 12, 13 are, they can be reliably supported and send out by the belt conveyer mechanism E. Further, when the product parts 12 are sucked and held by using the transportation robot 8 and the moving and loading member 52, no scratches will be formed on the rear surfaces of product parts 12 that are pressed against the surface of the endless belt 40.

According to the laser cutting device 5 of the present embodiment, the displacement rollers 38, 48 comprising the respective belt conveyer mechanisms E and F are supported by the right and left sliding blocks 27a, 27b in a freely rotating manner such that the displacement rollers 38, 48 are displaced integrally with the sliding member 21 in the feeding direction X, it is possible to expand and contract the respectively supporting regions R1 and R2 of the belt conveyer mechanisms E and F in accurate synchronization with the movements of the processing head B in the feeding direction X. No exclusive driving source for displacing the displacement rollers 38, 48 is required to thus achieve a simple and cheap structure.

Since the dust-collecting box 30 is mounted to the right and left sliding blocks 27a, 27b such that the dust-collecting box 30 is displaced integrally with the sliding member 21 in the feeding direction X, it is possible to move the dust-collecting box 30 in accurate synchronization with the movements of the processing head B in the feeding direction, and no exclusive driving source for moving the dust-collecting box 30 is required to thus achieve a simple and cheap structure.

It should be noted that the present invention is not limited to the above embodiment but may be embodied upon performing various modifications in accordance with purposes of use within the scope of the present invention. More particularly, while the laser cutting system 1 is arranged in the above embodiment in that the loop forming portion 4 is disposed between the leveler device 3 and the laser cutting device 5, the present invention is not limited to this but may alternatively be arranged as illustrated in Fig. 8 in which the loop forming portion is omitted in comprising a laser cutting system 100 and wherein a sheet material 11 that has been uncurled by the leveler device 3 is directly sent to between the pair of transfer rollers 18a, 18b. The same actions and effects as those of the above embodiment may be achieved by such a structure while it is further possible to achieve compactness of the entire system.

While YAG laser light is supplied to a single processing head B that is capable of performing three-dimensional movements and laser cutting of a sheet material is performed by this processing head alone, the present invention is not limited to such a structure, and it is alternatively possible to provide, in addition to the processing head B that is capable of performing three-dimensional movements, a separate processing head 61 as illustrated in Fig. 9 upon positioning and fixing the same at a specified position on an upstream side of the pair of transfer rollers 18a, 18b such that YAG laser light from the laser oscillator 62 is supplied to these processing heads B, 61 through output divergence or time share such that laser cutting of the sheet materials 11 is performed by using these processing heads B, 61. When employing such a structure, it is possible to perform trimming of a side edge portion 64 of the sheet material 11 through the processing head 61 while the product parts 12 may be cut by the processing head B as illustrated in Fig. 10(a) so that it is possible to obtain product parts 12 in an extremely effective manner. In this regard, it was conventionally the case with general blanking lines that they were arranged on the premise of exclusive base material processing without trimming devices being comprised, and different base materials could not be simultaneously processed but rewinding of the coil strip or exchange of molds needed to be frequently performed which resulted in causes of degradations in productivity.

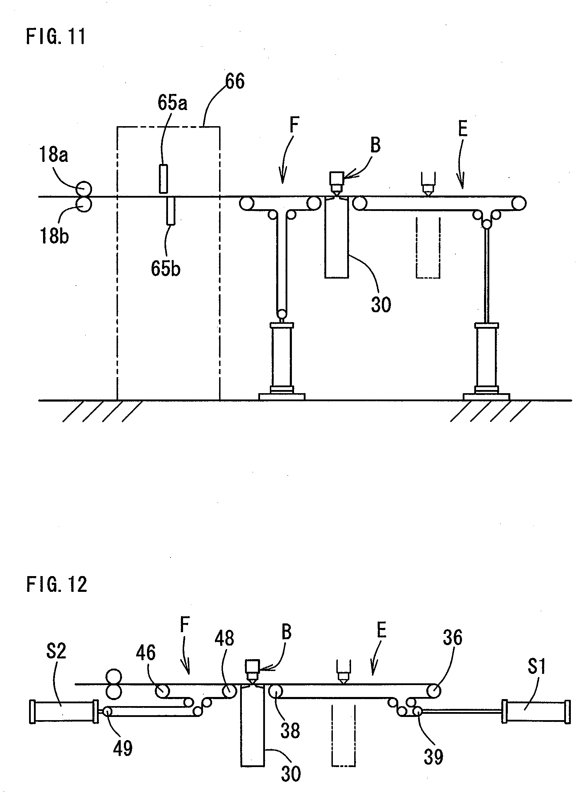

As illustrated in Fig. 11, it is alternatively possible to comprise a laser cutting device by providing a sheet material cutting device 66 between the pair of transfer rollers 18a, 18b and the upstream-sided belt conveyer mechanism F, wherein the device includes upper and lower cutting blades 65a, 65b that approach and estrange with respect to each other. In such a case, the sheet material cutting device 66 is used for cutting straight lines along the sheet material width direction Y while the processing head B is used for cutting complicated curves or straight lines that intersect with the sheet material width direction Y so that it is possible to effectively cut product parts.

While the laser cutting device 5 of the above embodiment is arranged in that the tension adjusting rollers 39, 49 are displaced along the vertical direction Z, the present invention is not limited to this, and the laser cutting device may be arranged as illustrated in Fig. 12, wherein the tension adjusting rollers 39, 40 are displaced along the feeding direction X. With this arrangement, the space efficiency in vertical directions of the laser cutting device may be improved.

While the laser cutting device 5 of the above embodiment is arranged in that the belt conveyer mechanisms E and F comprise the upstream-sided supporting means and the downstream-sided supporting means, the present invention is not limited to this, and it is alternatively possible to provide, as illustrated in Fig. 13, a roller conveyer mechanism 68 as the upstream-sided supporting means while a belt conveyer mechanism 69 is provided as the downstream-sided supporting means to comprise the laser cutting device. The roller conveyer mechanism 68 is arranged in that a shutter member 78 is provided that may be accumulated in an accumulating position while it is freely movable in the feeding direction and with a plurality of supporting rollers 79 that are supported by the shutter member 78 in a freely rotating manner. The belt conveyer mechanism 69 is of identical structure as that of the above-described belt conveyer mechanism E.

It should be noted that it is possible to arrange the laser cutting device, vice versa, with a belt conveyer mechanism being provided as the upstream-sided supporting means and with a roller conveyer mechanism being provided as the downstream-sided supporting means.

Further, as illustrated in Fig. 14, the laser cutting device may be arranged by providing roller conveyer mechanisms 70, 71 as the upstream-sided supporting means and the downstream-sided supporting means. More particularly, it is possible to provide a shutter member 72 that may be accumulated in an accumulating position while it is freely movable in the feeding direction, and a plurality of supporting rollers 73 may be provided such that are supported by the shutter member 72 in a freely rotating manner. Further, as illustrated in Fig. 15, the dust-collecting box 30 may be connected to an endless belt 75 that, in turn, supports a plurality of supporting rollers 76 in a freely rotating manner.

## Claims

1. A laser cutting device, comprising
a material transferring means that transfers a sheet-like material in a feeding direction,
a processing head that is capable of irradiating laser light towards said material,
a head moving means that makes said processing head move in the feeding direction and a width direction of said material,
an upstream-sided supporting means that supports said material that is transferred by said material transferring means and that expands and contracts a supporting region for said material accompanying movements of said processing head in the feeding direction, and
a downstream-sided supporting means that supports cut parts, which are obtained by performing laser cutting of said material by means of said processing head, and that expands and contracts a supporting region for said cut parts accompanying movements of said processing head in the feeding direction.

2. The laser cutting device as claimed in Claim 1, further comprising a dust-collecting means that collects dust at a downward portion of said processing head.

3. The laser cutting device as claimed in Claim 1, further comprising a material cutting means that cuts said material through shearing.

4. The laser cutting device as claimed in Claim 1, wherein said downstream-sided supporting means is comprised of a belt conveyer mechanism or a roller conveyer mechanism.

5. The laser cutting device as claimed in Claim 1, wherein said upstream-sided supporting means is comprised of a belt conveyer mechanism or a roller conveyer mechanism.

6. The laser cutting device as claimed in Claim 4 or 5, wherein said belt conveyer mechanism includes a displacement roller that is displaceable along the feeding direction, a reference roller that opposes the displacement roller remote therefrom by a specified distance in the feeding direction and that is not displaceable, an endless belt that is wound around between said displacement roller and said reference roller, and a tension adjusting means that adjusts tension of the endless belt.

7. The laser cutting device as claimed in Claim 6, wherein said tension adjusting means includes a tension adjusting roller that is displaceable within a plane including the feeding direction and by which said endless belt is wound around.

8. The laser cutting device as claimed in Claim 6, wherein said displacement roller is supported to be freely rotating by a sliding member that comprises said head moving means and that is movable along the feeding direction.

9. The laser cutting device as claimed in Claim 1, wherein said material transferring means includes a pair of transfer rollers capable of pinching said material from front and rear directions, and a driving source that rotates at least either one of said transfer rollers.

10. The laser cutting device as claimed in Claim 2, wherein said dust-collecting means includes a dust-collecting box that is movable in the feeding direction and that is provided with an upper end aperture facing along the width direction of said material.

11. The laser cutting device as claimed in Claim 10, wherein said dust-collecting box is fixed at a sliding member that comprises said head moving means and that is movable along the feeding direction.

12. The laser cutting device as claimed in Claim 3, wherein said material cutting means includes a pair of upper and lower cutting blades that relatively approach and estrange with respect to each other.

13. The laser cutting device as claimed in Claim 1, wherein said processing head is capable of irradiating laser light that is transmitted through optical fibers.

14. A method for laser cutting employing the laser cutting device as claimed in Claim 1, wherein the method comprises the steps of expanding and contracting said supporting region for said cut parts of said downstream-sided supporting means in the feeding direction as well as of expanding and contracting said supporting region for said material of said upstream-sided supporting means in the feeding direction accompanying movements of said processing head in the feeding direction.

15. The method for laser cutting as claimed in Claim 14, wherein dust is collected by a dust-collecting means at a downward portion of said processing head when performing laser cutting of said material.

16. The method for laser cutting as claimed in Claim 14, wherein said material is cut upon combining cutting through laser cutting and shearing.

17. A laser cutting system, comprising a coil strip supporting device for supporting the coil strip such that a sheet-like material may be wound out from the coil strip, a leveler device that is disposed on a downstream side of the coil strip supporting device for flatly expanding said material wound out from said coil strip, and the laser cutting device as claimed in Claim 1 that is disposed on a downstream side of the leveler device for cutting said material that has been flatly expanded by the leveler device.

18. The laser cutting system as claimed in Claim 17, further comprising a loop forming device that is disposed between said leveler device and said laser cutting device for forming a loop portion on said material that has been flatly expanded by said leveler device.

19. The laser cutting system as claimed in Claim 17, further comprising a separating and collecting device that is disposed on a downstream side of said laser cutting device for separating and collecting product parts, which are the cut parts, and scrap parts.

## Amended claims

### Amended claims under Art. 19.1 PCT

**1.** (Amended) A laser cutting device, comprising
a material transferring means that transfers a sheet-like material in a feeding direction,
a processing head that is capable of irradiating laser light towards said material,
a head moving means that makes said processing head move in the feeding direction and a width direction of said material,
an upstream-sided supporting means that supports said material that is transferred by said material transferring means and that expands and contracts a supporting region for said material accompanying movements of said processing head in the feeding direction, and
a downstream-sided supporting means that supports cut parts, which are obtained by performing laser cutting of said material by means of said processing head, and that expands and contracts a supporting region for said cut parts accompanying movements of said processing head in the feeding direction,
wherein said upstream-sided supporting means is comprised of a first belt conveyer mechanism or a first roller conveyer mechanism, and wherein said downstream-sided supporting means is comprised of a second belt conveyer mechanism or a second roller conveyer mechanism.

**2.** The laser cutting device as claimed in Claim 1, further comprising a dust-collecting means that collects dust at a downward portion of said processing head.

**3.** The laser cutting device as claimed in Claim 1, further comprising a material cutting means that cuts said material through shearing.

**4.** (Canceled)

**5.** (Canceled)

**6.** (Amended) The laser cutting device as claimed in Claim 1, wherein at least one of said first and second belt conveyer mechanisms includes a displacement roller that is displaceable along the feeding direction, a reference roller that opposes the displacement roller remote therefrom by a specified distance in the feeding direction and that is not displaceable, an endless belt that is wound around between said displacement roller and said reference roller, and a tension adjusting means that adjusts tension of the endless belt.

**7.** The laser cutting device as claimed in Claim 6, wherein said tension adjusting means includes a tension adjusting roller that is displaceable within a plane including the feeding direction and by which said endless belt is wound around.

**8.** The laser cutting device as claimed in Claim 6, wherein said displacement roller is supported to be freely rotating by a sliding member that comprises said head moving means and that is movable along the feeding direction.

**9.** The laser cutting device as claimed in Claim 1, wherein said material transferring means includes a pair of transfer rollers capable of pinching said material from front and rear directions, and a driving source that rotates at least either one of said transfer rollers.

**10.** The laser cutting device as claimed in Claim 2, wherein said dust-collecting means includes a dust-collecting box that is movable in the feeding direction and that is provided with an upper end aperture facing along the width direction of said material.

**11.** The laser cutting device as claimed in Claim 10, wherein said dust-collecting box is fixed at a sliding member that comprises said head moving means and that is movable along the feeding direction.

**12.** The laser cutting device as claimed in Claim 3, wherein said material cutting means includes a pair of upper and lower cutting blades that relatively approach and estrange with respect to each other.

**13.** The laser cutting device as claimed in Claim 1, wherein said processing head is capable of irradiating laser light that is transmitted through optical fibers.

**14.** A method for laser cutting employing the laser cutting device as claimed in Claim 1, wherein the method comprises the steps of expanding and contracting said supporting region for said cut parts of said downstream-sided supporting means as well as of expanding and contracting said supporting region for said material of said upstream-sided supporting means in the feeding direction in the feeding direction accompanying movements of said processing head in the feeding direction.

**15.** The method for laser cutting as claimed in Claim 14, wherein dust is collected by a dust-collecting means at a downward portion of said processing head when performing laser cutting of said material.

**16.** The method for laser cutting as claimed in Claim 14, wherein said material is cut upon combining cutting through laser cutting and shearing.

**17.** A laser cutting system, comprising a coil strip supporting device for supporting the coil strip such that a sheet-like material may be wound out from the coil strip, a leveler device that is disposed on a downstream side of the coil strip supporting device for flatly expanding said material wound out from said coil strip, and the laser cutting device as claimed in Claim 1 that is disposed on a downstream side of the leveler device for cutting said material that has been flatly expanded by the leveler device.

**18.** The laser cutting system as claimed in Claim 17, further comprising a loop forming device that is disposed between said leveler device and said laser cutting device for forming a loop portion on said material that has been flatly expanded by said leveler device.

**19.** The laser cutting system as claimed in Claim 17, further comprising a separating and collecting device that is disposed on a downstream side of said laser cutting device for separating and collecting product parts, which are the cut parts, and scrap parts.
